# EUROPEAN PATENT APPLICATION

(11) **EP 3 406 165 A1**
(43) Date of publication of application: **28.11.2018**
(21) Application number: 17741669.0
(22) Date of filing: 19.01.2017
(51) Int. Cl.: A47J 36/06, A47J 27/08

(54) **ENERGY-SAVING SAFETY POT HAVING NO STEAM OUTLET**

(30) Priority: 21.01.2016 KR 20160007787
(71) Applicant: Park, Joon-myoung, Namyangju-si, Gyeonggi-do 12206 (KR)
(72) Inventor: Park, Joon-myoung, Namyangju-si, Gyeonggi-do 12206 (KR)
(74) Representative: dompatent von Kreisler Selting Werner - Partnerschaft von Patent- und Rechtsanwälten mbB
(86) International application number: PCT/KR2017/000655
(87) International publication number: WO 2017/126903

(57) **Abstract**

The present invention relates to a cooking pot, and more particularly, to an energy saving safety cooking pot without steam outlet capable of minimizing the loss of heat and moisture during cooking and preventing excessive pressure rise in advance by condensing and recovering high temperature steam generated by heating a foodstuff.

The present invention provides an energy saving safety cooking pot without steam outlet comprising: a vessel with a space capable of containing foodstuff; a lid without steam outlet to cover and close the upper opening of the vessel, wherein the lid is formed with a wave-like corrugated structure so that a contacting area of the steam generated during heat cooking is enlarged; and, a pressure discharging member attached and combined to the lid for regulating and discharging the heated steam when the pressure in the vessel exceeds an allowance level.

## Description

### [Technical Field]

The present invention relates to a cooking pot, and more particularly, to an energy saving safety cooking pot without steam outlet capable of minimizing the loss of heat and moisture during cooking and preventing excessive pressure rise in advance by condensing and recovering high temperature steam generated by heating a foodstuff.

### [Background of the Invention]

The cooking pot used for heating or boiling food is used for various purposes in our daily life, such as cooking rice, soup, stew, or noodle which contain much liquid in the soup. The general configuration of the pot consists of a container for heating food and a lid with a small steam outlet of several millimeters in diameter.

In the early stage of heating where it is necessary to heat up to a high temperature in a short time, the heating efficiency is lowered due to the discharge of the high-temperature steam. On the other hand, when boiling, the steam is not sufficiently discharged and the soup overflows, therefore, and the lid is opened while cooking in many cases. However, there have been a problem that cooking food in a condition where the lid is open is accompanied by much waste of energy (loss of heat and moisture).

Korean Patent Registration No. 10-0421189 discloses a multipurpose pressure cooker capable of instantly reducing the high temperature and high pressure in a pressure cooker by forming a cooling means in a pressure cooker lid to rapidly cook various foodstuffs while keeping the original taste of the foodstuff, but the structure of the pressure cooker for achieving the above-mentioned functional characteristics is very complicated and was not successfully commercialized.

On the other hand, in recent years, various types of cooking pots have been developed, and it is required to develop a cooking pot functioning as no-water-addition style cooking where the high-temperature steam generated in the container during heating cooking changes into water droplets by cooling condensation the moment it touches the lid and falls into the container to be recovered, or a cooking pot with a self-basting function by repeatedly putting water on the surface of food to prevent the food from drying out. But a cooking pot satisfying such requirement has not yet been developed.

### [Prior Art Document]

### [Patent Document]

(Patent Document 001) Korean Patent Registration No. 10-0421189 (Date of Registration: 2004. 2. 20)

### [Summary of the Invention]

It is an object of the present invention to address the above-mentioned problems and to provide an energy saving safety cooking pot without steam outlet by forming the a as a wave form without steam outlet, and thereby making a high temperature saturated steam condition in a short time in the vessel during heating cooking as well as minimizing the loss of moisture and heat loss through the re-supply of water so that the surface of the food may not dry out due to the falling of the condensed water drops, the condensing made possible due to the difference of temperature between the inside and the outside of the vessel and the enlarged surface area in contact with the generated high temperature steam.

It is another object of the present invention to provide an energy saving safety cooking pot without steam outlet by providing a pressure discharge member in the lid which enables the selective discharge of a heated steam so that the heated steam can be automatically controlled and discharged to the outside due to the steady increase of the heated steam such as high temperature steam generated in the vessel during the heating cooking.

It is still another object of the present invention to provide an energy saving safety cooking pot without steam outlet by forming a lid rim in a round shape, and making the upper rim of the opening part of the vessel curved inward, and thereby preventing the occurrence of a gap at a portion where the vessel and the lid are contacting each other due to enlarged contact area of the rim.

To achieve the above-mentioned object, the present invention provides an energy saving safety cooking pot without steam outlet comprising: a vessel with a space capable of containing foodstuff; a lid without steam outlet to cover and close the upper opening of the vessel, wherein the lid is provided with a wave-like corrugated structure so that a contacting area of the steam generated during heat cooking is enlarged; and, a pressure discharging member attached and combined to the lid for regulating and discharging the heated steam when the pressure in the vessel exceeds an allowance level.

And the lid is formed to have corrugated structure with plurality of repeated grooves making wave form for the purpose of minimizing moisture and heat loss through condensation due to expansion of contact area of steam and restoration due to falling of water drops generated by the condensation as well as self-basting through repetition of the condensation and the restoration, wherein each corrugation starts from a portion close to the convex center and extends to the edge, and is radially arranged with respect to the center.

Also, a seating portion having an inwardly curved shape is formed in the opening upper edge portion of the vessel so that the contact area between the lid and the vessel is enlarged, wherein the seating portion abuts the rim of the lid.

And the handle comprises a grip portion which can be grasped by hand and a binding holder for the combined engagement of the grip portion and the pressure discharge member, and a holder portion for guiding the discharge flow of the heating steam is further protruded from the upper surface of the lid so that the grip portion is spaced apart from the upper surface of the lid by a predetermined distance, and the holder portion is formed with an induction hole for guiding the discharge of the heating steam and a discharge port for guiding the final discharge of the heating steam along the induction hole, and a female screw portion for the threaded fastening assembly of the binding holder is formed on the inner surface of the induction hole.

The pressure discharge member has a cylindrical structure made of a material having elasticity capable of deforming by pressure rise in the vessel in a state where the pressure discharge member is engaged in a manner of a forced fit assembly with the binding holder, and according to the formation of a diaphragm plate cutting across the central portion of the inner space, a pressure hole extending from the inner part of the binding holder is formed in the lower portion, and a discharge hole extending from the inner part of the grip portion is formed separately in the upper portion.

The binding holder has a cylindrical structure in which an inflow hole through which heating steam can flow is passed through in the longitudinal direction, wherein a male screw portion is formed on the upper outer circumferential surface so as to allow threaded fastening to the female screw portion, and a lower end portion is formed in a disk shape having an enlarged diameter so that the holder portion is firmly adhered to the upper side of the lid when the holder portion is assembled with the screw fastening method, and the inner wall of the inflow hole is formed with one or more insertion grooves for the rigid assembly engagement of the pressure discharge member inwardly.

And at a central portion of the diaphragm plate, a incision portion which is a passage is formed in a cross shape for allowing discharge of the heated steam when the inner pressure of the pressure hole rises as the heating steam in the vessel is introduced into the pressure and continues to be introduced.

Further, on the outer circumferential surface of the pressure discharging member, at least one inserting frame which can be fitted into the insertion groove is formed to protrude from the central portion, and on an upper portion spaced apart from the inserting frame, a seating frame is protruded to prevent further insertion of the pressure discharging member being seated on the upper surface of the binding holder.

### [The Effect of the Invention]

The energy-saving safety pot without the steam outlet of the present invention minimizes loss of moisture and heat due to evaporation because as soon as the high-temperature steam generated in the vessel when cooking and heating touches the lid, it changes into water droplets due to cooling condensation and falls and returns to the vessel. And no-water-addition cooking is achieved by the present invention in that it is possible to cook with only the moisture contained in the food ingredients without adding or supplying additional moisture during cooking. Further, the present invention provides self-basting function that prevents the food from drying by repeated operation of the condensation and recovery of the steam (falling of the water droplets into the vessel) as described above. The above-mentioned beneficial functions of the present invention provide great advantages including preservation of original flavor of the food.

Additionally, since the heating steam which causes the internal pressure of the vessel to increase can be selectively discharged through the pressure discharge member (automatic safety venting), it is possible to address the problem of steam overflow and there is an effect of preventing excessive increase of internal pressure in the vessel caused by increased heating steam.

### [Brief Description of the Drawings]

FIG.'s 1 to 3 are respectively a perspective view, an exploded perspective view, and a front sectional view showing the internal and external structure of an energy-saving safety pot without a steam outlet according to the present invention.
Fig. 4 is an exemplary view showing the state of the lid being lifted in an energy-saving safety pot without a steam outlet according to the present invention.
FIG. 5A and FIG. 5B are respectively a plan view showing the structure of the lid and an enlarged cross-sectional view taken along the line B-B of FIG. 3, in the energy-saving safety pot without the steam outlet according to the present invention.
FIG. 6 is an enlarged view showing the configuration of a pressure discharge member in an energy-saving safety pot without a steam outlet according to the present invention.
FIG. 7 is an enlarged perspective cross-sectional view showing the structure of a pressure discharge member in an energy saving safety pot without a steam outlet according to the present invention.
FIG. 8 is a front sectional view showing another embodiment of an energy-saving safety pot without a steam outlet according to the present invention.
FIG. 9 is a plan view of a main part showing another embodiment of a lid in an energy-saving safety pot without a steam outlet according to the present invention.

### <Explanation of Reference Numerals and Symbols>

A: safety pot
1: vessel
1a: containing space
2: lid
2a: binding hole
3: pressure discharge member
3a: pressure hole
3b: discharge hole
11: seating portion
12: grip portion
21: handle
31: diaphragm plate
32: insertion frame
33: seating groove
210: holder portion
210a: induction hole
210b: discharge hole
210-1: female thread portion
211: grip portion
212: binding holder
212a: inflow hole
212a-1: insertion groove
212-1: male screw portion
311: incision portion

### [Detailed Description of Preferred Embodiments]

Hereinafter, preferred embodiments of the present invention will be described in detail with reference to the accompanying drawings, so that those skilled in the art can easily carry out the present invention. First, in adding reference numerals to the constituent elements of the drawings, it is to be noted that the same constituent elements are denoted by the same reference numerals even though they are shown in different drawings.In the following description of the present invention, a detailed description of known functions and configurations incorporated herein will be omitted when it may make the subject matter of the present invention rather unclear.

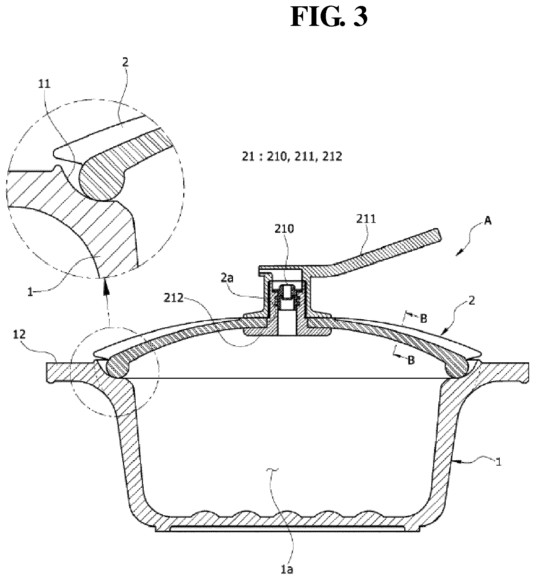

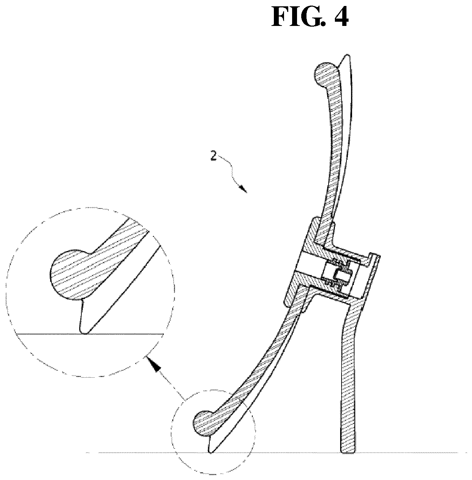

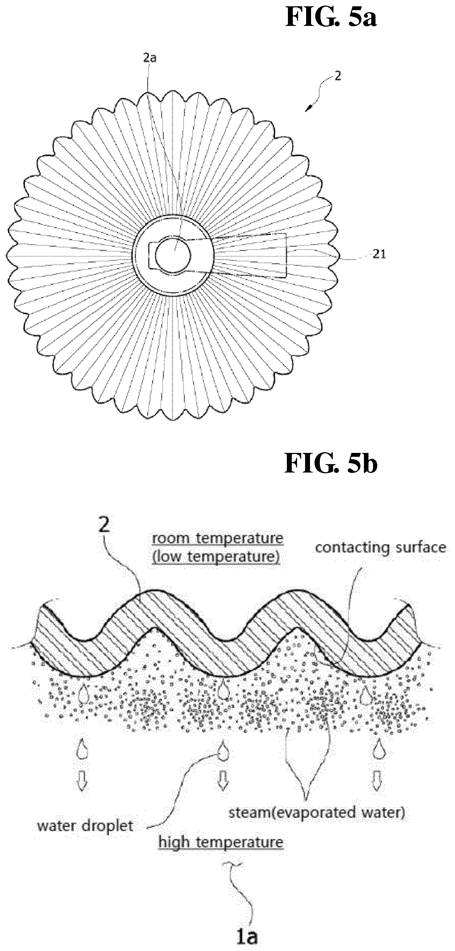

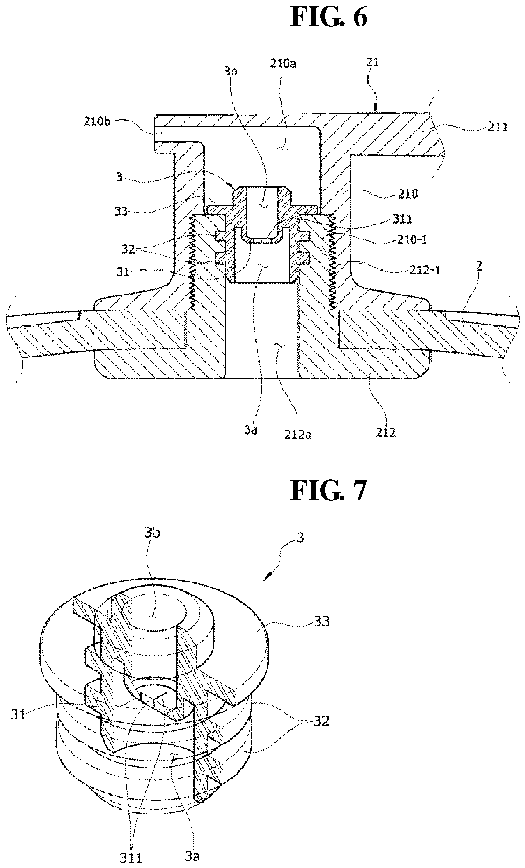

FIG.'s 1 to 3 are 1 to 3 are respectively a perspective view, an exploded perspective view, and a front sectional view showing the internal and external structure of an energy-saving safety pot without a steam outlet according to the present invention, Fig. 4 is an exemplary view showing the state of the lid being lifted in an energy-saving safety pot without a steam outlet according to the present invention, FIG. 5A and FIG. 5B are respectively a plan view showing the structure of the lid and an enlarged cross-sectional view taken along the line B-B of FIG. 3, in the energy-saving safety pot without the steam outlet according to the present invention, FIG. 6 is an enlarged view showing the configuration of a pressure discharge member in an energy-saving safety pot without a steam outlet according to the present invention, FIG. 7 is an enlarged perspective cross-sectional view showing the structure of a pressure discharge member in an energy saving safety pot without a steam outlet according to the present invention.

As illustrated in FIG.'s 1 and 2, an energy saving safety cooking pot without steam outlet comprises: a vessel 1 with an containing space 1a capable of containing foodstuff; a lid 2 to cover and close the upper opening of the vessel 1, wherein the lid 2 is formed with a wave-like corrugated structure so that a contacting area of the high temperature steam (hereinafter, "steam") generated during heat cooking is enlarged; and, a pressure discharging member 3 attached and combined to the lid 2 for automatically regulating and discharging the heating steam when the pressure in the vessel exceeds an allowance level.

The vessel 1 is a cooking utensil placed on a heating source such as a gas range for heating and boiling the food stuffs in the containing space 1a, it is easy to put food stuffs into the containing space 1a by opening the upper end of the vessel 1 as illustrated in FIG. 3,along the upper edge of the opening of the vessel 1 container, a seating portion 11 formed curved inwardly to surround the edge of the lid 2 enlarging the contact area between the two.

Further, at the outside of the upper edge portion of the opening, at least one grip portion 12 is protruded so that a user can grip it and easily carry and move the vessel 1.

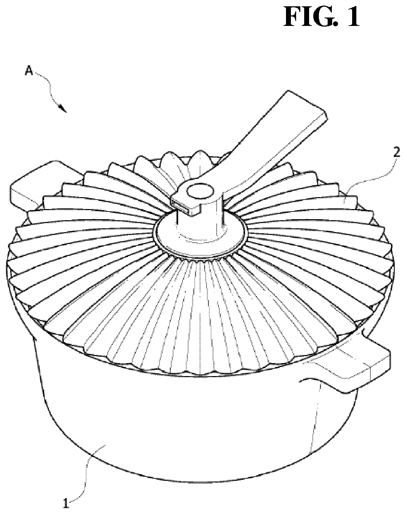

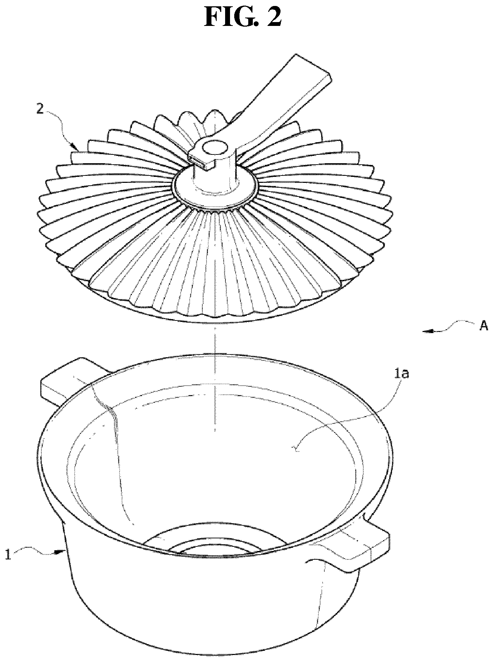

The lid 2 closely covers the upper end of the opening of the vessel 1 to prevent contamination of foreign materials into the containing space 1a and to minimize moisture and heat loss due to the evaporation of the steam generated during cooking, as illustrated in Figs. 2 and 5A and 5B, it is preferable that the corrugated structure of waves is alternately formed in the lid 2 not only to minimize the loss of moisture and heat by cooling condensation through enlargement of the steam contacting area and falling recovery of the formed water droplets but also to enable self-basting through repetition of of condensation and falling recovery.

A connecting hole 2a for assembling the handle 21 is formed in the center portion of the upper convex portion so as to allow the user to grasp the lid 2 and to easily open and close the lid 2 from the vessel 1.

On the other hand, as illustrated in FIG. 4, It is preferable that the end of the corrugated portion is further protruded outward than the rim so that the rim of the lid 2 which contacts with the seating portion 11 of the vessel 1 is prevented from touching the surface of the sink or the kitchen countertop thereby maintaining a clean sanitary condition when the lid 2 is placed on the sink or kitchen countertop after opening from the vessel 1 to stir the ingredients in the vessel 1 evenly or to move the cooked food to another container.

As illustrated in FIG. 6, the handle 21 comprises a grip portion 211 which can be grasped by hand and a binding holder 212 for maintaining assembly and the state of combination as well as coupling the pressure discharge member 3, and the holder portion 210 for allowing the grip portion 211 to be spaced apart from the upper surface of the lid 2 by a predetermined distance and for guiding the discharge flow of the heating steam is further extended to protrude below one end of the grip portion 211 .

The holder 210 is formed with an induction hole 210a for guiding the discharge of the heating steam and a discharge port 210b for guiding the final discharge of the heating steam along the induction hole 210a.

In addition, on the inner surface of the guide hole 210a, a female threaded portion 210-1 for threaded fastening and assembly of the binding holder 212 is formed.

An inflow hole 212a through which heating steam can flow is formed in a cylindrical structure penetrating along the longitudinal direction, and a male screw portion 212-1 is formed on the upper outer circumferential surface so that the female screw portion 210-1 can be threadedly engaged, and the diameter of the lower end is expanded to a disk shape, so that the binding holder 212 allows the holder 210 to firmly adhere to the lid 2 when the holder 210 is assembled by the fastening method,

In addition, the inner wall surface of the inflow hole 212a is provided with one or more insertion grooves 212a-1 are formed inwardly so that the corresponding inserting frame of the pressure discharging member 3, which will be described later, may be inserted to make the fitting state of the pressure discharge member 3 rigid when assembled,

The pressure discharge member 3 is preferably made of a material having elasticity so that it can be easily assembled to the inflow hole 212a of the binding holder 212 forcibly and can be deformed by the pressure when the pressure in the container rises due to the continuous inflow of heating steam into the inflow hole 212a.

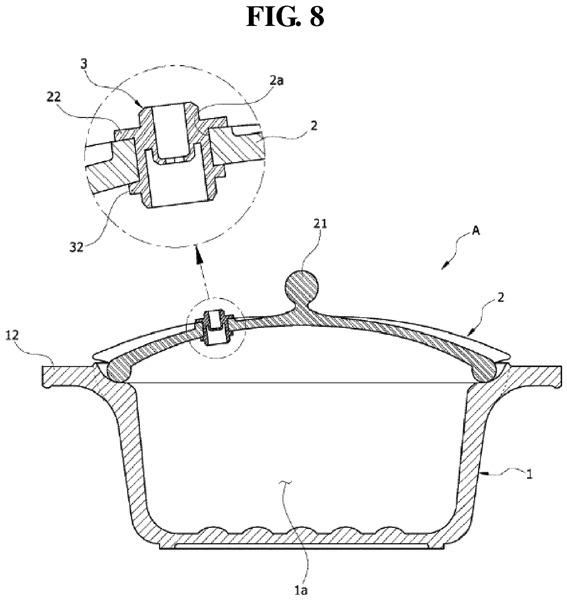

And as illustrated FIGS. 7 and 8, the pressure discharge member has an empty hollow cylindrical shape, as a result of the formation of the diaphragm plate 31 which cuts across the central part of the internal space, and a discharge hole 3b extending from the induction hole 210a of the grip portion 211 is provided at an upper side, and a pressure hole 3a connected to the inflow hole 212a of the binding holder 212 is provided at the lower side.

At the center of the diaphragm plate 31, the incision portion 311 is formed in a cross shape which functions as a passage for allowing the heating steam to be discharged when the internal pressure of the pressure hole 3a rises as the inflow of the heating steam continues and the heating steam in the vessel 1 flows into the pressure hole 3a.

And on its outer circumferential surface, one or more insertion frame 32 that can be fitted into the insertion groove 212a-1 formed inward of the wall surface of the inflow hole 212a of the binding holder 212 are protruded from the center, and a seating frame 33 is protruded on the upper side which is spaced apart from the insertion frame 32 to be seated on the upper surface of the binding holder 212 for holding the pressure discharge member 3 so as to prevent the pressure discharge member 3 from being further inserted.

In addition, FIG. 8 is a front sectional view showing another embodiment of the energy-saving safety pot without the steam outlet according to the present invention, even if the structure of the lid 2 is changed in a form in which the handle 21 is omitted, the pressure discharge member 3 can be assembled, to this end, the pressure discharge member (3) can be forcibly fitted and assembled to the coupling hole (2a) after the hole (2a) is formed on a part of the lid (2), the upper surface of the insertion frame 32 of the pressure discharge member 3 and the lower surface of the seating frame 33 are kept in close contact with the upper and lower surfaces of the lid 2, and the assembled state can be maintained.

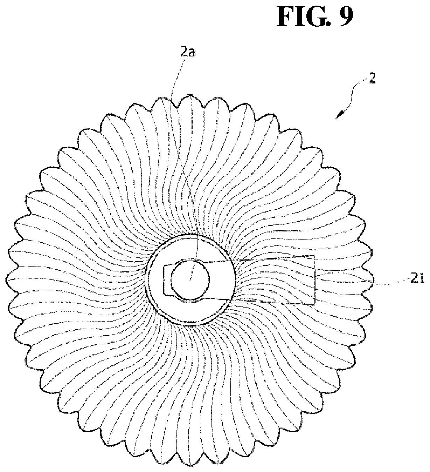

In addition, FIG. 9 is a plan view of the main part of a lid according to another embodiment of an energy-saving safety pot without a steam outlet according to the present invention, it is possible to further enlarge the contact area of the steam through the fact that the progress direction of the crests and roots of the corrugations repeatedly formed in the lid 2 is different, to this end, the contact area can be further enlarged by allowing the progress of the roots of the corrugations from the central part to which the handle 21 is assembled to form curves to reach the rim.

The operation of the energy saving safety pot A according to the present invention having the above-described configuration will be described in detail as follows.

First, a predetermined amount of the food stuff to be cooked is filled in the containing space 1a of the vessel 1, and then the vessel 1 is covered with the lid 2 so that the containing space 1a is closed. And then the pot 1 of the present invention is placed on the heat source for heating cooking and the cooking is started.

At this time, the rim portion of the lid 2 closely covers the seating portion 11 formed at the upper edge of the opening of the vessel 1, in particular, since the seating portion 11 has a curved structure, it can be effectively adhered to any part of the lid 2, and it is possible to achieve a completely closed state in which no gap is generated at a portion where the lid and the main body of the vessel 1 come into contact with each other, that is, at any portion of the opening upper edge portion of the vessel 1.

In this state, the above-described heating cooking is started and the vessel 1 is heated, and the cooking of the foodstuffs stored in the containing space 1a of the vessel 1, including heating, light cooking, boiling down, steaming, frying, baking, frying, etc., can be done.

In the cooking process, as shown in FIG. 5B, the broth is boiled, or the moisture contained in the food stuff is evaporated, so that the high-temperature steam is gathered upward over the containing space 1a, when the high temperature steam hits the bottom surface of the lid 2, which is kept in a state of low temperature distribution due to the influence of the external temperature (room temperature) which is relatively low compared with the internal heat temperature of the vessel, it is cooled and condensed in the form of water droplets due to the internal and external temperature difference.

Here, since the lid 2 is formed with a wave-like corrugated structure, the contact area of the steam is enlarged, so that the aforementioned condensation can be effective, and as a result, most of the steam is cooled and condensed and dropped and recovered in the form of water droplets on the food being heated and cooked, heat loss due to steam evaporation is minimized and basting, which prevents food from drying out, also automatically takes place.

In addition, in the heating cooking process, heating steam is generated in the head space above the food between the vessel 1 and the lid 2, the heating steam thus generated gradually increases and the pressure of the containing space 1a of the vessel 1 is increased, if the pressure in the containing space 1a exceeds an appropriate range, a certain amount of heated steam can be automatically controlled and discharged to the outside through the pressure discharge member (3), thereby preventing a safety accident.

More specifically, when the pressure of the containing space 1a of the vessel 1 is increased due to the generation and increase of the expansion pressure due to the heating cooking, as the internal pressure increases. the heating steam flows through the inflow hole 212a of the binding holder 212 coupled to the holder 210 of the handle 21 into the pressure hole 3a provided at the lower side of the pressure discharge member 3, if the internal pressure of the pressure hole 3a increases due to the continuation of the process, the incision portion 311 cannot withstand the pressure and the opened state is maintained, thereby enabling the discharge of the heated steam.

That is, when the incision portion 311 is kept in the open state, the heating steam remaining in the containing space 1a passes through the incision portion 311 through the pressure hole 3a and then passes through the discharge hole 3b and the induction hole 210a and through the discharge hole 210b and is discharged to the outside finally, and if the internal pressure of the vessel 1 drops to a certain value in this process, the incision portion 311 is restored to its original shape again, so that the containing space 1a of the container 1 is again maintained in a sealed state from the outside.

Thus, by repeating the process described so far when the inner pressure of the vessel 1 rises, the selective discharge of the heated steam is enabled, and the loss of moisture and heat in the vessel can be suppressed by the external discharge of the heating steam, so that the heating cooking can be smoothly performed.

To summarize, by providing the lid 2 with a corrugated structure, and thereby reducing moisture and heat loss by recovery (falling) of water droplets as a result of cooling condensation of steam and causing the self-basting action to occur, it is possible to achieve the effect of saving the original flavor of the food in heating cooking.

At the same time, the heating steam, which is a factor for raising the inner pressure of the pot due to the heating cooking, can be selectively discharged through the flow portion 22 of the lid 2, and therefore it is possible to prevent the occurrence of a safety accident such as a flap and explosion of the lid 2 which may occur due to generation and increase of heated steam in the containing space 1a of the vessel 1.

The above description is only illustrative of the technical idea of the present invention and it will be apparent to those skilled in the art that various modifications, additions and substitutions are possible, without departing from the spirit and scope of the invention. Therefore, the embodiments disclosed in the present invention and the accompanying drawings are intended to illustrate rather than limit the technical spirit of the present invention, and the scope of the technical idea of the present invention is not limited by these embodiments and the accompanying drawings. The scope of protection of the present invention should be construed according to the following claims, and all technical ideas within the scope of equivalents should be construed as falling within the scope of the present invention.

## Claims

1. An energy saving safety cooking pot without steam outlet comprising:
a vessel 1 with a containing space 1a capable of containing foodstuff;
a lid 2 without steam outlet to cover and close the upper opening of the vessel 1; and
a pressure discharging member 3 attached and combined to the lid 1 for regulating and discharging the heating steam when the pressure in the vessel 1 exceeds an allowance level;
wherein the lid 1 is provided with a wave-like corrugated structure so that a contacting area of the steam generated during heat cooking is enlarged,
wherein a seating portion 11 having an inwardly curved shape is formed in the opening upper edge portion of the vessel 1 so that the contact area where the seating portion 11 abuts the rim of the lid 2 is enlarged,
wherein the pressure discharge member 3 has a cylindrical structure made of a material having elasticity capable of being deformed by pressure rise in the vessel 1, in a state where the pressure discharge member 3 is engaged in a manner of a forcible fitting assembly with the binding holder 212, and according to the formation of a diaphragm plate 31 cutting across the central portion of the inner space, a pressure hole 3a extending from the inner part of the binding holder 212 is formed in the lower portion, and a discharge hole 3b extending from the inner part of the grip portion 211 is formed separately in the upper portion.

2. An energy saving safety cooking pot without steam outlet of claim 1,
wherein the lid 2 is formed to have corrugated structure with plurality of repeated grooves making wave form to enlarge the contact area of steam,
wherein each corrugation starts from a portion close to a upwardly convex center and extends to the edge of a rim, and is radially arranged with respect to the center.

3. An energy saving safety cooking pot without steam outlet of claim 1,
wherein a handle 21 is provided at the upwardly convex center in the lid 2, and the handle 21 comprises a grip portion 211 which can be grasped by hand and a binding holder 212 for the combined engagement of the grip portion 211 and the pressure discharge member, and a holder portion 210 for guiding the discharge flow of the heating steam is further protruded from the upper surface of the lid 2 so that the grip portion 211 is spaced apart from the upper surface of the lid 2 by a predetermined distance, and the holder portion 210 is formed with an induction hole 210a for guiding the discharge of the heating steam and a discharge port 210b for guiding the final discharge of the heating steam along the induction hole 210a, and a female screw portion 210-1 for the threaded fastening assembly of the binding holder 212 is formed on the inner surface of the induction hole 210a.

4. An energy saving safety cooking pot without steam outlet of claim 3,
wherein the binding holder 212 has a cylindrical structure in which an inflow hole 212a through which heating steam can flow is passed through in the longitudinal direction,
and wherein a male screw portion 212-1 is formed on the upper outer circumferential surface so as to allow threaded fastening to the female screw portion 210-1, and a lower end portion is formed in a disk shape having an enlarged diameter so that the holder portion 210 is firmly adhered to the upper side of the lid 2 when the holder portion 210 is assembled with the screw fastening method, and the inner wall of the inflow hole 212a is formed with one or more insertion grooves 212a-1 for the rigid assembly engagement of the pressure discharge member 3 inwardly.

5. An energy saving safety cooking pot without steam outlet of claim 1,
wherein at a central portion of the diaphragm plate 31, an incision portion 311 which is a passage is formed in a cross shape for allowing discharge of the heated steam when the inner pressure of the pressure hole 3a rises as the heating steam in the vessel 1 is introduced into the pressure and continues to be introduced.

6. An energy saving safety cooking pot without steam outlet of claim 4,
wherein on the outer circumferential surface of the pressure discharging member 3, at least one inserting frame which can be fitted into the insertion groove 212a-1 is formed to protrude from the central portion, and on an upper portion spaced apart from the inserting frame 32, a seating frame 33 is protruded to prevent further insertion of the pressure discharging member 3 by being seated on the upper surface of the binding holder 212.
